# EUROPÄISCHE PATENTSCHRIFT

(11) **EP 3 228 417 B1**
(45) Veröffentlichungstag und Bekanntmachung des Hinweises auf die Patenterteilung: **16.02.2022**
(21) Anmeldenummer: 17162860.5
(22) Anmeldetag: 24.03.2017
(51) Int. Cl.: B23K 26/08, B23K 26/10, B23K 26/362, B23K 26/40, G01G 7/02, G01G 23/36, B23K 101/20, B23K 101/28

(54) **VERFAHREN UND VORRICHTUNG ZUR LASERBEARBEITUNG VON MONOLITISCHEN STRUKTUREN FÜR WÄGETECHNISCHE ANWENDUNGEN**
METHOD OF AND DEVICE FOR LASER PROCESSING OF MONOLITIC STRUCTURES FOR USE IN THE WEIGHT-FIELD
PROCÉDÉ ET DISPOSITIF DE TRAITEMENT LASER DE STRUCTURES MONOLITHIQUES UTILISÉES DANS LE DOMAINE DU PESAGE

(30) Priorität: 01.04.2016 DE 102016105985
(43) Veröffentlichungstag der Anmeldung: 11.10.2017
(73) Patentinhaber: WIPOTEC GmbH, 67657 Kaiserslautern (DE)
(72) Erfinder: Rübel, Andreas, 67737 Olsbrücken (DE); Schulzki, Alexander, 67705 Stelzenberg (DE); Gottfriedsen, Jan, 67714 Waldfischbach-Burgalben (DE); Herrmann, Dr. Thomas, 67705 Trippstadt (DE)
(74) Vertreter: Eder Schieschke & Partner mbB

(56) Entgegenhaltungen:
- WO-A1-2013/117754
- DE-A1- 10 118 291
- DE-A1-102005 019 757
- DE-A1-102008 015 403
- DE-B4-102013 103 791
- US-A1- 2013 153 554

## Beschreibung

Die vorliegende Erfindung betrifft ein Verfahren und eine Vorrichtung zur materialabtragenden Laserbearbeitung monolithischer Strukturen, die insbesondere für wägetechnische Anwendungen vorgesehen sind. Solche monolithischen Strukturen (auch "Monoblöcke" genannt) enthalten nach Fertigstellung häufig einen oder mehrere Hebel, Koppelstangen oder Parallellenker, welche in der der monolithischen Struktur freigeschnitten (gefräst, erodiert oder Ähnliches) wurden und lediglich über als Gelenk fungierende Materialdünnstelle mit weiteren Bereichen des Monoblocks in Verbindung stehen. Dabei wird eine Bearbeitungsgenauigkeit im Submillimeter gefordert, und insbesondere die als Gelenke fungierenden Dünnstellen müssen mit hoher Präzision bearbeitet werden.

Ein zu bearbeitender Monoblock erstreckt sich dabei in drei Raumrichtungen, von denen die Breite im Weiteren als Z-Richtung bezeichnet sein soll. Eine Dünnstelle wird beispielsweise gebildet durch zwei zueinander parallele, in Z-Richtung verlaufende zylinderförmige Ausnehmungen beziehungsweise Bohrungen, die zwischen ihren Mantelflächen nur noch einen geringen Materialsteg aufweisen - die Dünnstelle. Sowohl die Dicke einer solchen Dünnstelle quer zur Z-Richtung, als auch deren Länge in Z-Richtung bestimmt deren Steifigkeit, was erheblichen Einfluss auf die von den einzelnen Hebeln übertragenen und schließlich zu messenden Kräfte hat.

Aus der DE 10 2013 108 097 A1 ist ein Verfahren zum Fertigen eines Kraftmesskörpers bekannt, bei dem Material mittels Laser in der Nähe einer bestehenden Dünnstelle abgetragen wird, um das Auslenkungsverhalten eines über die Dünnstelle gekoppelten Hebels zu beeinflussen.

Aus der DE 102013 103 791 B4 (Basis für den Oberbegriff des Anspruchs 1) ist ein monolithisches Wägesystem bekannt, bei dem in einen Hebelarm mittels Laser eine Schlitzblende eingebracht wird, was beispielsweise auch über einen Spiegel erfolgen kann.

Aus der DE 10 2008 015 403 A1 (Basis für den Oberbegriff des Anspruchs 11) ist eine Einrichtung zum Feinbearbeiten einer Innenoberfläche einer Werkstückbohrung bekannt. Sie umfasst eine steuerbare Verstelleinrichtung, mittels welcher eine Optikeinrichtung relativ zu einer Maschinenspindel verstellbar ist, so dass eine Bewegung eines aus der Maschinenspindel austretenden Laserstrahls unabhängig von der Rotationsbewegung der Maschinenspindel steuerbar ist.

Die DE 101 18 291 A1 beschreibt eine Vorrichtung zum Laser-Belichten einer Fläche von metallischen Werkstücken. Die Vorrichtung umfasst einen mit einem Laserstrahl beaufschlagbaren Umlenkspiegel, der so ausgerichtet ist, dass der vom Spiegel reflektierte Laserstrahl eine zu belichtende Fläche unter einem von 90° abweichenden Winkel trifft mit dem Ziel, die Lebensdauer des Umlenkspiegels zu erhöhen.

Die Laserbearbeitung von monolithischen Strukturen, beispielsweise aus Aluminium, erzeugt eine andere Bearbeitungsoberfläche als mit herkömmlichen spanabhebenden Verfahren (bspw. Bohren, Fräsen). Solche spanabhebenden Verfahren erzeugen in der Regel eine blanke, glänzende Bearbeitungsoberfläche. Bei der Laserbearbeitung wird an einer Vielzahl benachbarter Punkte Material abgetragen, was zu einer weniger glänzenden Substruktur mit einer gewissen Rauheit führt.

Die Benutzung von Lasern zur hochgenauen materialabtragenden Bearbeitung monolithischer Strukturen ist dann relativ einfach, wenn der Laser von außerhalb der monolithischen Struktur direkt auf die Zielpunkte gerichtet werden kann, welche zum Materialabtrag vom Laser erreicht werden müssen. Häufig liegen die Zielpunkte jedoch so innerhalb der monolithischen Struktur, dass ein von außen einstrahlender Laser, wenn er direkt auf den Bearbeitungspunkt einstrahlen soll, dies gar nicht oder nur unter einem sehr ungünstigen Winkel tun kann. Hohe Reflexionen verschlechtern in diesem Fall die Abtragwirkung erheblich. Betroffen sind beispielsweise die Innenseiten von Parallellenkerstrukturen oder innen liegende Gelenke. Eine Laserbearbeitung in konventionellem Sinn ist hier nicht mehr möglich, da der Laserstrahl möglichst senkrecht auf die zu bearbeitende Fläche auftreffen soll und die Geometrie der monolithischen Struktur dies nicht zulässt.

Aufgabe der Erfindung war es daher, ein Verfahren und eine Vorrichtung anzubieten, welche die materialabtragende Laserbearbeitung an schwer zugänglichen Stellen innerhalb monolithischer Strukturen ermöglicht. Die Aufgabe wird gelöst durch ein Verfahren nach Anspruch 1 und eine Vorrichtung nach Anspruch 11. Weitere vorteilhafte Ausführungsformen ergeben sich aus den Unteransprüchen.

Die Erfindung beruht auf der Erkenntnis, einen von außen in die zu bearbeitende monolithische Struktur gerichteten Laserstrahl innerhalb des Blockes geeignet umzulenken und zu verfahren/verschwenken, um ihn dadurch einer Schar von Zielpunkten zuzuführen, welche durch den Laser materialabtragend bearbeitet werden sollen. Das erfindungsgemäße Verfahren enthält die Bearbeitungsschritte a) bis e) gemäß Anspruch 1. Es zeichnet sich einerseits dadurch aus, den Laserstrahl im Inneren der monolithischen Struktur geeignet umzulenken, und ihn andererseits in Z-Richtung zu verfahren und/oder um eine in Z-Richtung verlaufende Schwenkachse zu schwenken, um während dieser Bewegungen eine festgelegte Schar von Zielpunkten zu erreichen und dort Material abzutragen. Durch definiertes Verfahren beziehungsweise Verschwenken des Laserstrahls lassen sich insbesondere geradlinig oder kreisbogenförmig angeordnete Bearbeitungspunkte leicht erreichen und bearbeiten. Selbstverständlich ist auch eine zeitliche Überlagerung beider Bewegungen möglich. Die Kombination aus umgelenktem Laserstrahl und dessen Verfahren und/oder Verschwenken innerhalb der monolithischen Struktur gestattet die hochgenaue materialabtragende Bearbeitung über längere Bearbeitungsstrecken, beispielsweise über die gesamte Blockbreite, und auch an schwer zugänglichen Stellen (Zielpunkten) innerhalb des Blockes. Das Verfahren umfasst dabei wenigstens die Schritte gemäß Anspruch 1.

Es versteht sich, dass der Bearbeitungskopf zweckmäßigerweise auch senkrecht zur Z-Richtung, also in X- oder Y-Richtung, verfahrbar sein kann, und auch ein Verschwenken um diese Achsen kann die Durchführung des Bearbeitungsverfahrens erleichtern.

Die Bewegung des Bearbeitungskopfes beziehungsweise der davon gehaltenen Umlenkmittel kann dabei alternierend, dauernd oder zeitweise erfolgen. So kann beispielsweise eine Hinterschneidung durch mehrfaches, unmittelbar aufeinanderfolgendes Vor- und Zurückschwenken des Bearbeitungskopfes um die Z-Achse um einen vorgebbaren Schwenkwinkel erfolgen, bis der gewünschte Materialabtrag abgeschlossen ist. Eine Längsbearbeitung der monolithischen Struktur ergibt sich durch Verfahren des Bearbeitungskopfes in Z-Richtung, was zum Zweck einer möglichst gleichmäßigen, absatzlosen Bearbeitungsoberfläche möglichst über die gesamte gewünschte Bearbeitungsbreite (bspw. über die gesamte Breite der monolithischen Struktur) in einem Zug erfolgt.

Eine zwischen zwei kreisförmigen Materialausnehmungen verbleibende Dünnstelle lässt sich beispielsweise herstellen beziehungsweise bearbeiten, indem der Bearbeitungskopf jeweils die gesamte Z-Länge der Dünnstelle unter einem bestimmten Schwenkwinkel um die Z-Achse entlangfährt, wobei sich vor dem nächsten Hub in Z-Richtung der Schwenkwinkel geringfügig ändert, um einen anderen Bereich der kreisförmigen Ausnehmung zu erzeugen oder zu bearbeiten. Umgekehrt könnte die Bearbeitung auch erfolgen, indem an einer bestimmten Eintauchtiefe (Z-Position) der gesamte für die Erzeugung der Rundung erforderliche Schwenkwinkel durch Drehen des Bearbeitungskopfes abgefahren wird, bevor der Kopf zur nächsten Z-Position verfahren wird, um dort wieder den gesamten erforderlichen Schwenkwinkel abzufahren. Selbstverständlich sind Überlagerungen der Schwenk- und Verfahrbewegung jederzeit möglich. Auch die Überlagerung der nachfolgend noch näher beschriebenen Rasterung mit der Verfahr- oder Verschwenkbewegung des Bearbeitungskopfes ist möglich, so dass an jeder Z-Position und unter jedem gewählten Drehwinkel des Bearbeitungskopfes eine Rasterung erfolgen kann, bevor oder während der Bearbeitungskopf seine Z-Position oder seinen Drehwinkel ändert.

An einem rückwärtigen, gegebenenfalls außerhalb des Monoblocks verbleibenden Ende des Bearbeitungskopfes wird der Laserstrahl in den Bearbeitungskopf hineingerichtet, vorzugsweise entlang einer in Z-Richtung verlaufenden Längsachse des Bearbeitungskopfes. Im Bereich des vorderen Endes des Bearbeitungskopfes, welches für die Bearbeitung in die monolithische Struktur eingeschoben wird, trifft der Laserstrahl auf die Umlenkmittel, welche ihn aus der Z-Richtung um vorzugsweise 90° so umlenken, dass der umgelenkte Laserstrahl etwa senkrecht zur Z-Richtung seitlich aus dem Bearbeitungskopf heraustritt und einen zu bearbeitenden Zielpunkt erreicht. Der Laser kann dazu durch eine seitliche Öffnung des Bearbeitungskopfes hindurch nach außen geführt werden. Alternativ könnte der Bearbeitungskopf am vorderen stirnseitigen Ende offen sein, wobei die Umlenkmittel etwas über das stirnseitige Ende in Z-Richtung hinausragen, so dass der dann umgelenkte Laserstrahl jenseits des stirnseitigen Endes zur Seite abgelenkt wird. Im Gegensatz zu einem vorne aus dem Kopf herausragenden Umlenkmittel hat die Ablenkung des Laserstrahls durch eine seitliche Öffnung des Bearbeitungskopfes den Vorteil, dass diese Öffnung nur unwesentlich größer als der hindurchtretende Laserstrahl sein muss, so dass das ungewollte Eindringen von Schmutz oder Materialabtrag in das Innere des Bearbeitungskopfes vermieden oder verhindert wird. Selbst bei der nachfolgend noch beschriebenen Rasterung genügt eine seitliche Öffnung in einer Größe von bspw. 1 mm². Ein vorn offener Bearbeitungskopf dagegen ist einfacher herzustellen und gestattet insbesondere eine vereinfachte Absaugung des Materialabtrags, wie noch zu sehen sein wird.

Für eine besonders gute Absaugung des bei der Bearbeitung aus dem Block herausgelösten Materials ist es in jedem Fall zweckmäßig, die Umlenkmittel oder die Außenwand des Bearbeitungskopfes möglichst nahe an den zu bearbeitenden Zielpunkt heranzuführen. Vorzugsweise beträgt der Abstand zwischen den Umlenkmitteln oder der Außenseite des Bearbeitungskopfes dazu weniger als 5 mm, weiter bevorzugt weniger als 2 mm. Höchst bevorzugt liegt der Abstand unterhalb von 0,5 mm. Eine in den Bearbeitungskopf hineinführende Absaugung wird durch diesen reduzierten Abstand besonders nah an den jeweils zu bearbeitenden Zielpunkt herangeführt und kann entsprechend effektiv absaugen. Für die Erzeugung oder Bearbeitung einer um die Z-Richtung gerundeten Ausnehmung (bspw. eine Seite einer Dünnstelle) bietet es sich an, den Bearbeitungskopf im Bereich des Laseraustritts ebenfalls gerundet, bspw. zylinderförmig, auszubilden. So kann der Bearbeitungskopf nahe an die Rundung im Monoblock herangeführt werden und bildet mit ihr einen dünnen Ringspaltabschnitt für eine gute Absaugwirkung. Dadurch kann die Ablagerung von Material auf den Bearbeitungsflächen, insbesondere den Dünnstellen von Gelenken, gut vermieden werden.

Außerdem ist bei Absaugung nahe am Bearbeitungspunkt ein geringeres Luftvolumen zur Abführung des Materialabtrags erforderlich. Erfolgt die Laserbearbeitung während des Betriebs des Monoblocks (Details hierzu nachfolgend), so nimmt ein geringeres Luftvolumen auch weniger störenden Einfluss auf die Messwert-Anzeige, was eine genauere Korrektur der Bearbeitungsparameter ermöglicht.

Erfindungsgemäß soll mit dem Verfahren eine Schar von Zielpunkten bearbeitet werden. Dabei kann es sich um eine Gruppe von Punkten handeln, welche im Raum nur einen einzelnen Punkt (nulldimensional) bilden, eine gerade oder geschwungene Linie (eindimensional), eine ebene oder gekrümmte Fläche (zweidimensional) und sogar ein beliebig ausgeprägtes Volumen (dreidimensional). Zumindest einige der Zielpunkte einer zuvor festgelegten Schar von Zielpunkten werden dabei nacheinander von dem Laser angefahren, indem der Bearbeitungskopf in Z-Richtung verfahren oder um die Z-Achse herum verschwenkt wird. So lassen sich Punkte oder Bereiche von Oberflächen nachbearbeiten oder dreidimensionale Ausnehmungen herstellen, um beispielsweise eine Dünnstelle auf eine vorgebbare Länge in Z-Richtung zuzuschneiden. Ferner lässt sich Material entlang von Linien oder aus Nuten abtragen, die bei Überlagerung der Schwenkbewegung des Lasers um die Z-Achse und dem Verfahren in Z-Richtung eine nahezu frei wählbare räumliche Form haben können.

Bevorzugt lässt sich das erfindungsgemäße Verfahren für die Bearbeitung einer Gelenkstruktur einsetzen, insbesondere um die Dünnstelle eines Gelenks herauszuarbeiten oder bearbeiten zu können. Ein solches Gelenk kann dabei Teil eines Hebels, eines Lagers, einer Koppelstange oder eines Parallelogrammlenkers sein, bei dem es auf hochgenaue Bearbeitungen im µm-Bereich ankommt. Gleichwohl kann das Verfahren auch zur Bearbeitung anderer Bereiche einer monolithischen Struktur verwendet werden, bei denen µm-genauer Materialabtrag nicht erforderlich ist, die jedoch von außerhalb des Blockes nicht oder nur durch zusätzlich vorzusehende seitliche Ausnehmungen für klassische spanabhebende Bearbeitungsverfahren zugänglich sind, um bspw. Hebel, Hinterschneidungen oder sonstige Ausnehmungen zu erzeugen oder weiter zu bearbeiten.

Eine vorteilhafte Ausführungsform des Verfahrens sieht vor, dass der Laser zunächst als Rohstrahl von einer Laserquelle erzeugt wird, die ihrerseits ortsfest oder mit dem Bearbeitungskopf verbunden sein kann. Der von der Laserquelle erzeugte Rohstrahl (L') wird vor Erreichen der Umlenkmittel erfindungsgemäß durch eine ortsfeste oder mit dem Bearbeitungskopf bewegliche Optikeinheit hindurchgeführt, um den für die Bearbeitung vorgesehenen Laserstrahl (L) einzustellen. Unter "Einstellung" ist hier insbesondere die Fokussierung zu verstehen, die dergestalt erfolgt, dass der Laserstrahl unter Berücksichtigung der Umlenkmittel so gebündelt wird, dass er eine bevorzugte Energiedichte am Ort des jeweils zu bearbeitenden Zielpunktes aufweist.

Bei der Optikeinheit kann es sich um eine dem Fachmann an sich bekannte Anordnung von optischen Elementen der Lasertechnik (Linsen, Filter, Blenden, etc.) handeln. Einzelne oder alle dieser Elemente können erforderlichenfalls über Stellorgane (bspw. Piezoelemente) bewegt oder verstellt werden, wozu die Stellorgane geeignete Steuersignale aus einer übergeordneten Steuereinheit erhalten oder über Encoder an diese ausgeben können. Im Rahmen der erfindungsgemäßen Bearbeitung kann es erforderlich sein, die Einstellung des Laserstrahls während des Verfahrens in Z-Richtung und/oder des Verschwenkens um die Z-Achse stetig oder sprunghaft zu verändern, insbesondere, wenn sich beim Verfahren/Verschwenken der Abstand zwischen Bearbeitungskopf und jeweils anvisiertem Zielpunkt ändert. Mit den genannten optischen Elementen ist diese Einstellung möglich. Beispielsweise kann eine Fokussierung des Laserstrahls durch Änderung des Abstands zwischen den Umlenkmitteln und der Laserquelle angepasst werden, was grundsätzlich auch während des Betriebs möglich ist. ("Fokusnachführung").

Nach einer weiteren vorteilhaften Ausführungsform des Verfahrens ist vorgesehen, aus der Schar von Zielpunkten eine Auswahl bei relativ zum Monoblock unbewegten Umlenkmitteln zu bearbeiten. Dazu werden die Elemente der Optikeinheit so angesteuert, dass sie den von der Laserquelle eintreffenden Rohstrahl L' auf jeweils unterschiedliche Bereiche der Umlenkmittel richten, so dass der jeweils umgelenkte Strahl L verschiedene Zielpunkte der Auswahl erreicht und bearbeitet ("Rasterung"). Beispielsweise kann eine Auswahl von Zielpunkten, die auf einer Fläche von 1 mm² angeordnet ist, ausschließlich mittels Rasterung bearbeitet werden, ohne dass hierzu die Umlenkmittel bewegt werden müssten. Vorzugsweise wird der Laserstrahl bei der Rasterung mittels der Optikeinheit so ausgerichtet, dass er stets in Z-Richtung liegt, aber in geringem Maß senkrecht dazu in X- und/oder Y-Richtung verschoben wird. Dadurch werden verschiedene Bereiche der Umlenkmittel zur Umlenkung anvisiert, und auch die reflektierten Laserstrahlen verlaufen weitgehend parallel zueinander. Bei der Rasterung kann eine Fläche von beispielsweise 1 mm² abgerastert werden.

Der Vorteil dieses Verfahrens liegt darin, dass die Umlenkmittel nicht bewegt beziehungsweise nur einmalig positioniert werden müssen, um eine bestimmte Auswahl von Zielpunkten bearbeiten zu können. Durch Rastern können die ausgewählten Zielpunkte deutlich schneller bearbeitet werden, als dies unter alternativem Vorschub des Bearbeitungskopfes in Z-Richtung erfolgen kann. Eine notwendigerweise mit Toleranzen behaftete Neupositionierung der Umlenkmittel für jeden einzelnen Zielpunkt kann dabei vorteilhaft unterbleiben. Auf diese Weise könnten aneinander angrenzende Flächenallein durch Rasterung bearbeitet werden, indem nach Abschluss einer ersten Rasterung der Bearbeitungskopf vor Beginn der nächsten Rasterung in eine neue Bearbeitungsposition verfahren/verschwenkt wird, um bei dann wieder stillstehenden Umlenkmitteln die nächste Rasterung zu beginnen.

Allerdings hat sich gezeigt, dass bei dieser Vorgehensweise Stoßstellen mit unsauberen Übergängen zwischen den einzelnen gerasterten Bereichen entstehen. Nach einer vorteilhaften Ausführungsform des Verfahrens ist daher vorgesehen, das Verfahren und/oder Verschwenken der Umlenkmittel einem Rasterverfahren zu überlagern, wobei der Laserstrahl zumindest zeitweise sowohl mittels Optikeinheit auf unterschiedliche Bereiche der Umlenkmittel gerichtet, als auch durch Verfahren und/oder Verschwenken der Umlenkmittel auf verschiedene Zielpunkte gerichtet wird. Dadurch lassen sich die bei ausschließlicher Rasterung entstehenden Stoßstellen vorteilhaft vermeiden und es ergibt sich eine durchgehende Bearbeitungsfläche auch über längere Vorschubwege in Z-Richtung oder um die Z-Achse herum.

Nach einer weiteren vorteilhaften Ausführungsform der Erfindung wird der Laser im Ultrakurzpuls-Verfahren (UKP-Verfahren) betrieben. Dabei werden Pulslängen im Bereich unter 1 Nanosekunde gewählt mit Wiederholraten im Kilohertz- bis Megahertzbereich. Der Vorteil derart kurzer Laserimpulse liegt darin, dass kein oder nur ein geringer Wärmeeintrag in den Zielpunkt beziehungsweise seine Umgebung erfolgt, die Bearbeitungszone sich also nicht zu sehr erwärmt. Der besonders kurze Laserimpuls führt zur Laserablation (auch Laserverdampfen genannt), bei der der mit hoher Leistungsdichte eingebrachte Laser zur rapiden Erhitzung und zur Ausbildung eines Plasmas im Bereich des Zielpunktes führt. Dieses Überschreiten der Plasmaschwelle wird zur Abgrenzung gegenüber der Laser-Desorption herangezogen, bei der kein Plasma entsteht. Je nach Art und Intensität des Lasers ist bei einem auf einen Zielpunkt auftreffenden Laserimpuls Material in einer Tiefe von bspw. 2µm abtragbar. Der Lasterstrahl kann dabei am Zielpunkt eine Querschnittsfläche von bspw. 10µm aufweisen.

Der bei der Bearbeitung entstehende Materialabtrag wird nach einer vorteilhaften Ausführungsform der Erfindung durch einen am oder im Bearbeitungskopf angeordneten Absaugkanal abgeführt. Der Kanal kann auf der Außenseite des (beispielsweise rohrförmigen) Bearbeitungskopfes vorgesehen sein, wird aus Platzgründen jedoch vorzugsweise innerhalb dieses Kopfes geführt werden. Die Einsaugöffnung liegt zweckmäßigerweise möglichst nahe an dem jeweils zu bearbeitenden Zielpunkt. Bei einem durch eine seitliche Öffnung des Bearbeitungskopfes seitlich hinausgelenkten Laserstrahl sieht ein erfindungsgemäßes Verfahren daher vor, den Absaugkanal innenseitig des Bearbeitungskopfes möglichst nahe an dieser seitlichen Öffnung münden zu lassen. Durch nicht näher zu erläuternde Absaugmittel (Saugturbine etc.) kann der Absaugkanal dadurch im Bereich der seitlichen Öffnung einen Unterdruck erzeugen, mithilfe dessen der am Zielpunkt entstehende Materialabtrag durch die seitliche Öffnung hindurch ins Innere des Bearbeitungskopfes und weiter in dessen Absaugkanal eingesogen wird. Zugleich ist vorgesehen, den Abstand zwischen den Umlenkmitteln und der Einsaugöffnung des Absaugkanals ausreichend groß zu wählen, um eine versehentliche Beaufschlagung oder Ablagerung der Umlenkmittel mit Materialabtrag zu vermeiden, da sonst die Umlenkeigenschaften der Umlenkmittel beeinträchtigt würden.

Der Absaugkanal kann auch als Ringkanal ausgebildet sein, dessen Außenseite durch die Innenwand des vorzugsweise zylinderförmigen Bearbeitungskopfes gebildet wird. Die Innenseite des Ringkanals könnte durch zylinderförmige Umlenkmittel gebildet werden. Eine möglichst große Einsaugöffnung beziehungsweise ein möglichst großer Kanalquerschnitt gestattet einen hohen Volumendurchsatz mit entsprechend vorteilhafter Absaugwirkung.

Das erfindungsgemäße Verfahren eignet sich vorteilhaft zur Bearbeitung tief innerhalb der monolithischen Struktur angeordneter Zielpunkte. Um jede Tiefe in Z-Richtung innerhalb der monolithischen Struktur erreichen zu können, ist erfindungsgemäß vorgesehen, dass der Bearbeitungskopf eine Länge hat, die der ganzen oder zumindest der halben Breite des Blockes in Z-Richtung entspricht. So kann der Bearbeitungskopf jede Z-Position innerhalb des Blockes erreichen, evtl. von beiden in Z-Richtung gegenüber liegenden Blockseiten. Besonders bevorzugt kann die Bearbeitung dabei auch gleichzeitig mit mehreren erfindungsgemäßen Bearbeitungsköpfen erfolgen, mit denen gleichzeitig verschiedene oder auch die gleiche Dünnstelle, beispielsweise von zwei quer zur Z-Richtung gegenüberliegenden Seiten, bearbeitet werden kann. Dadurch lässt sich die Bearbeitungszeit insgesamt reduzieren. Reicht der Bearbeitungskopf tief genug in den Block, kann eine Dünnstelle ohne ansonsten möglicherweise erforderliches Umspannen des Monoblockes oder einer den Bearbeitungskopf bewegenden Halterung vollständig im Block freigeschnitten beziehungsweise hochgenau bearbeitet werden.

Das erfindungsgemäße Verfahren sieht die Bearbeitung einer monolithischen Struktur einer Wägezelle vor, während diese betrieben wird Dazu wird die monolithische Struktur mit äußeren Kräften beaufschlagt, die insbesondere auf einen Lastaufnehmer der Struktur einwirken können. Über eine in der Struktur angeordnete beziehungsweise darin freigeschnittene Hebelanordnung werden die Kräfte über- oder untersetzt und einem Kraftsensor zugeführt, der in Abhängigkeit der Kräfte Messwerte ausgibt (neben dem bevorzugten Verfahren der elektromagnetischen Kraftkompensation kommen auch andere, dem Fachmann geläufige Wägeprinzipien in Frage, wie etwa die schwingende Seite oder der Dehnungsmessstreifen). Die erfindungsgemäße Bearbeitung erfolgt dabei so, dass in Abhängigkeit eines Messwertes eine bestimmte Schar von Zielpunkten ermittelt wird, welche zu bearbeiten ist, um das tatsächliche Messergebnis einem zu erwartenden Ergebnis anzugleichen. So lassen sich beispielsweise bei Ecklastversuchen, bei denen die Kräfte unterschiedlich (insbesondere außermittig) in den Lastaufnehmer eingeleitet werden, aus den sich jeweils ergebenden Messwerten Rückschlüsse ziehen auf den noch erforderlichen Materialabtrag in bestimmten Zonen des Monoblockes, insbesondere an den Dünnstellen seiner Gelenke. Eine die Messwerte sofort auswertende Steuereinheit kann Steuersignale für die Laserbearbeitung erzeugen und diese Bearbeitung ausführen unmittelbar nach oder sogar während der Erfassung und Auswertung der erzeugten Messwerte. Dabei verbleibt der eingeschobene Bearbeitungskopf innerhalb des Monoblocks und bearbeitet nach Maßgabe der jeweils erzeugten Messwerte bzw. Steuersignale bestimmte Zielpunkte. Insbesondere ist es nicht erforderlich, zunächst einzelne Messungen durchzuführen und diese zu bewerten, um erst anschließend den Bearbeitungskopf zur Bearbeitung in den Monoblock einzuführen beziehungsweise den Bearbeitungskopf vor der nächsten Messung wieder aus dem Monoblock herauszuführen. Stattdessen bleibt der Kraftsensor in Betrieb, und aus seinen Werten können in Echtzeit sofort Rückschlüsse auf noch erforderliche Laser-Bearbeitungen gezogen werden, die sodann unmittelbar durchgeführt werden können. Daher kann der Bearbeitungskopf auch während mehrerer aufeinanderfolgender oder einer kontinuierlich erfolgenden Messung im Monoblock verbleiben. Dies spart erhebliche Bearbeitungszeit ein.

Ferner erhöht sich bei im Block verbleibendem Bearbeitungskopf auch die Bearbeitungsgenauigkeit, da möglicherweise sonst erforderliche Umspannvorgänge des Monoblocks zwischen der Messwerterfassung einerseits und der Bearbeitung andererseits entfallen können. Eine bei solchen Positionier- und Einspannvorgängen möglicherweise nicht zufriedenstellend erreichbare Positioniergenauigkeit ist bei dem erfindungsgemäßen Verfahren ohne Bedeutung, da hier der Monoblock während des gesamten Mess- und Bearbeitungsverfahrens (zumindest für einen ausgewählten Bearbeitungsbereich) unverändert ortsfest bleiben kann.

In Verbindung mit den genannten Messungen ist es natürlich möglich, gleichzeitig auch mehrere Bearbeitungsköpfe in den Block einzuführen, um zeitgleich an mehreren Stellen Material abtragen zu können. Hierbei ist es auch denkbar, beispielsweise zwei Bearbeitungsköpfe gemeinsam relativ zum Monoblock in Z-Richtung zu verfahren, um etwa gleichzeitig entlang einer Dünnstelle beidseitig Material abzutragen.

Generell kann die Relativbewegung eines oder mehrerer Bearbeitungsköpfe zur monolithischen Struktur erfolgen mithilfe einer ein- oder mehrachsig bewegbaren Halterung, welche den Bearbeitungskopf aufnimmt, wobei beispielsweise ein Roboter die Bewegung der Halterung und damit des Bearbeitungskopfes in verschiedenen Schwenk-oder Verfahrrichtungen des Raumes erzeugt. Der Roboter kann durch eine übergeordnete Steuereinheit angesteuert werden, welche Parameter für die Positionierung des Bearbeitungskopfes und/oder für die Fokussierung und Ausrichtung des Lasers von einer Recheneinheit erhält oder selbst erzeugt, beispielsweise in Abhängigkeit von mit der monolithischen Struktur erzeugten Messwerten.

Die erfindungsgemäße Vorrichtung zur Durchführung des vorstehend beschriebenen Verfahrens umfasst
- einen Bearbeitungskopf, in welchen ein Laserstrahl in einer ersten Richtung einleitbar ist, und
- Umlenkmittel, welche den Laserstrahl im Bearbeitungskopf in eine von der Richtung abweichende Richtung umlenken, um den umgelenkten Laserstrahl seitlich auf einen Zielpunkt (P₁, P₂...) zu richten,
- wobei der Bearbeitungskopf samt Umlenkmitteln in Richtung Z verfahrbar und/oder um eine in Z-Richtung verlaufende Schwenkachse verschwenkbar ist.

Der Bearbeitungskopf kann nach einer besonders bevorzugten Ausführungsform der Erfindung rohrförmig ausgebildet sein. Über das vordere Ende, welches im Betrieb in die monolithische Struktur eingeführt wird, lassen sich die Umlenkmittel in den Bearbeitungskopf einschieben und über geeignete Fixiermittel fest am Bearbeitungskopf anordnen, beispielsweise durch Kleben, Einspannen, lösbares Einrasten oder Verschrauben. Die Umlenkmittel können beispielsweise einen zylinderförmigen Körper mit abgeschrägter Stirnfläche umfassen, der von unten passgenau bis an einen Anschlag in den rohrförmigen Bearbeitungskopf einschiebbar ist. Die schräge Stirnfläche, die beispielsweise mit einer Z-Achse des Zylinders und des Bearbeitungskopfes einen Winkel von 45° einschließt, dient hier zur Umlenkung eines etwa in Z-Richtung auftreffenden Laserstrahls um 90° zur Seite. Die Umlenkmittel, insbesondere der den Laserstrahl umlenkende Bereich, könnte aus Glas oder einem anderen, dem Fachmann bekannten und geeigneten Material zur Umlenkung optischer Wellen bestehen. Die Umlenkmittel können lösbar mit dem Bearbeitungskopf verbindbar sein, um sie nach Bedarf auszutauschen. Je nach eingesetztem Laser oder gewünschtem Umlenkwinkel können Umlenkmittel mit entsprechend gewünschten Eigenschaften eingesetzt werden.

Vorzugsweise enthält die erfindungsgemäße Vorrichtung Absaugmittel zur Abführung des bei der Laserbearbeitung entstehenden Materialabtrags. Dabei kann es sich um einen die Z-Achse des Bearbeitungskopfes umlaufenden Ringkanal, mehrere einzelne Kanäle oder sonstige Mittel handeln, welche die Abführung des Materials besonders gut sicherstellen. Alternativ oder ergänzend können Absaugmittel auch solche sein, welche die zu bearbeitenden Zielpunkte oder deren Umgebung mit einem Gasstrom (insbesondere Luft) beaufschlagen, um das gelöste Material gezielt in eine bestimmte Richtung oder undefiniert fortzublasen, um einerseits die Bearbeitungsstelle, andererseits jedoch auch die Umlenkmittel vom abgetragenen Material zu befreien beziehungsweise frei zu halten.

Der von einer Laserquelle erzeugte Rohlaserstrahl L' kann unmittelbar auf die Optikeinheit gerichtet sein, um mit dieser den Laserstrahl L' vor der Umlenkung auszurichten oder zu fokussieren. Alternativ ist es auch denkbar, den Rohlaserstrahl L' von der Laserquelle mittels Lichtwellenleiter zur Optikeinheit zu leiten. Dies erleichtert möglicherweise den konstruktiven Aufbau und gestattet, die Laserquelle vom Bearbeitungskopf weiter zu entfernen.

Denkbar ist es ferner, die Umlenkmittel auch relativ zum Bearbeitungskopf verschwenkbar zu machen, so dass letzterer lediglich in Z-Richtung verschieden positionierbar ist. Das Verschwenken erfolgt dann vorzugsweise um die Z-Achse. Alternativ oder ergänzend kann auch ein Verschwenken um eine zur Z-Richtung senkrechte Achse (X, oder Y) erfolgen, so dass sich der Winkel zwischen dem Rohlaserstrahl L' und dem umgelenkten Laserstrahl L ändert. Dies vereinfacht den Anschluss möglicher Absaugkanäle. Zugleich könnte ein zwischen den drehbaren Umlenkmitteln und dem diesbezüglich drehfesten Bearbeitungskopf bestehender Ringspalt als Absaugkanal genutzt werden.

Eine weitere vorteilhafte Ausführungsform der Erfindung sieht vor, dass die Umlenkmittel mehrere zueinander abgewinkelte Umlenkbereiche aufweisen, welche einen auftreffenden Laserstrahl entsprechend in unterschiedlicher Weise ablenken. Denkbar ist beispielsweise ein um die Z-Achse ausgebildeter pyramidenförmiger Spiegel, dessen einzelne Seitenflächen um beispielsweise 45° zur Z-Achse geneigt sind. Die Spitze der Pyramide liegt dabei auf einer gedachten Mittelachse des Bearbeitungskopfes und weist zur Laserquelle hin. Durch aufeinanderfolgende Ausrichtung des Laserstrahls (etwa über die vorgenannte Optikeinheit) auf jeweils eine andere Seitenfläche der Pyramide lässt sich der jeweils seitlich umgelenkte Laserstrahl an unterschiedlichen Umfangspositionen des Bearbeitungskopfes aus diesem herausführen, ohne dass hierzu die Umlenkmittel (Pyramide) oder der Bearbeitungskopf um die Z-Achse verschwenkt werden müssten. Beispielsweise über das zuvor beschriebene Verfahren der Rasterung kann der Laser auf die unterschiedlichen Umlenk- beziehungsweise Spiegelflächen der Pyramide gerichtet werden, was auch in schneller Abfolge geschehen kann. Durch eine jeder Spiegelfläche zugeordnete umfangsseitige Ausnehmung in der Wandung des die Pyramide umfassenden Bearbeitungskopfes kann so zu mehreren Seiten hin bearbeitet werden.

Ergänzend oder alternativ können die Umlenkmittel auch so beschaffen sein, dass sie wenigstens zwei zueinander abgewinkelte Spiegelflächen aufweisen, welche den Laserstrahl in Bezug auf die Z-Richtung um unterschiedliche Winkel ablenken, beispielsweise einmal 95° und einmal 85°. Auch hier kann allein durch geeignete Positionierung des Laserstrahls auf der jeweiligen Spiegelfläche ein unter unterschiedlichem Winkel seitlich aus dem Bearbeitungskopf heraustretender Laser erzeugt werden. So lassen sich Zielpunkte in unterschiedlichen Z-Positionen erreichen, ohne dass der Bearbeitungskopf beziehungsweise die Umlenkmittel dazu in Z-Richtung verfahren werden müssten. Auch dies kann die Bearbeitung vereinfachen beziehungsweise verkürzen. Natürlich lassen sich die vorgenannten Ausführungsvarianten der Umlenkmittel auch kombinieren.

Um die Abführung des Materialabtrags zu verbessern, sieht eine vorteilhafte Ausführungsform der Erfindung gezielte Luftströmungen im Bearbeitungskopf vor. So kann neben der Absaugung in der Nähe der Laseraustrittsöffnung auch eine Zuluft eingebracht werden, welche vom rückwärtigen Ende des Bearbeitungskopfes in dessen Innerem bis an die Umlenkmittel und von dort in Richtung Austrittsöffnung geführt wird. Die Strömungsverhältnisse sind dabei so zu wählen, dass die Umlenkmittel (bspw. ein Spiegel) sicher angeströmt werden, um sie durch Bildung einer Art Luftkissen von Ablagerungen frei zu halten und evtl. auch zu kühlen. Allerdings darf die Zuluft nicht so stark eingestellt werden, dass sie der Absaugung entgegenwirkt und den gewollten Eintritt von Materialabtrag von außen in den Bearbeitungskopf verschlechtert oder gar verhindert.

Mithilfe eines Kamerasystems kann die Laserbearbeitungsvorrichtung kalibriert werden. Dazu kann ein Bearbeitungspunkt nach einem ersten Test-Laserimpuls hinsichtlich Materialabtrag und Kraterform visuell untersucht werden. Sofern die Form und/oder Menge bzw. Tiefe des Materialabtrags nicht zufriedenstellend erfolgt, kann über Einstellungen der Optikeinheit und/oder Positionskorrekturen des Bearbeitungskopfes relativ zum Bearbeitungspunkt in X-, Y- oder Z-Richtung neu fokussiert werden, bis die Kamera ein befriedigendes Bearbeitungsergebnis für den Testpunkt zeigt.

Der Bearbeitungskopf kann zumindest teilweise im Sinterdruckverfahren hergestellt sein, wodurch sich zusätzliche Freiheiten bezüglich der gewünschten Herstellungsgeometrie ergeben.

Nachfolgend soll eine Ausführungsform der Erfindung anhand eines Figurenbeispiels näher erläutert werden. Dabei zeigt
- Fig. 1: eine perspektivische Ansicht eines Monoblockes mit eingeführtem Bearbeitungskopf,
- Fig. 2: eine Laserbearbeitungsmaschine mit eingesetztem Monoblock,
- Fig. 3, 4: eine vereinfachte vergrößerte Darstellung des Bearbeitungskopfes,
- Fig. 5: eine vergrößerte Ansicht des Bearbeitungskopfes in einem Monoblock.

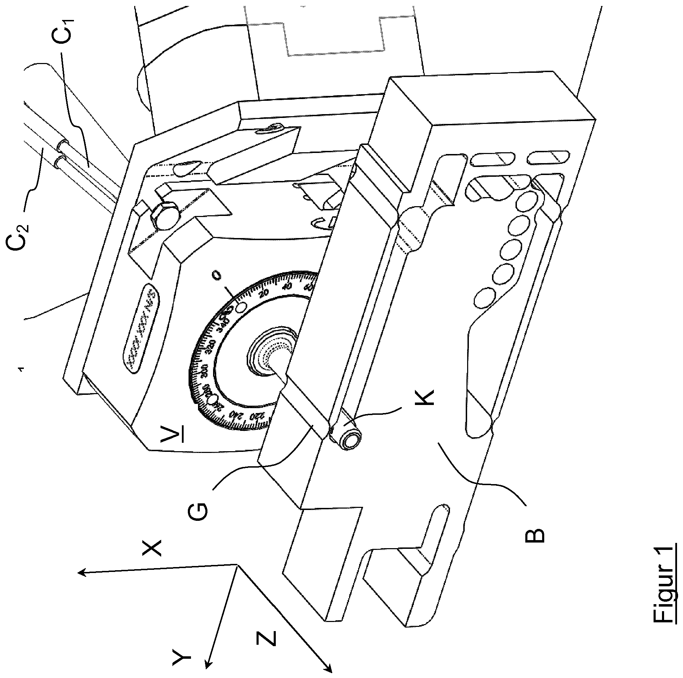

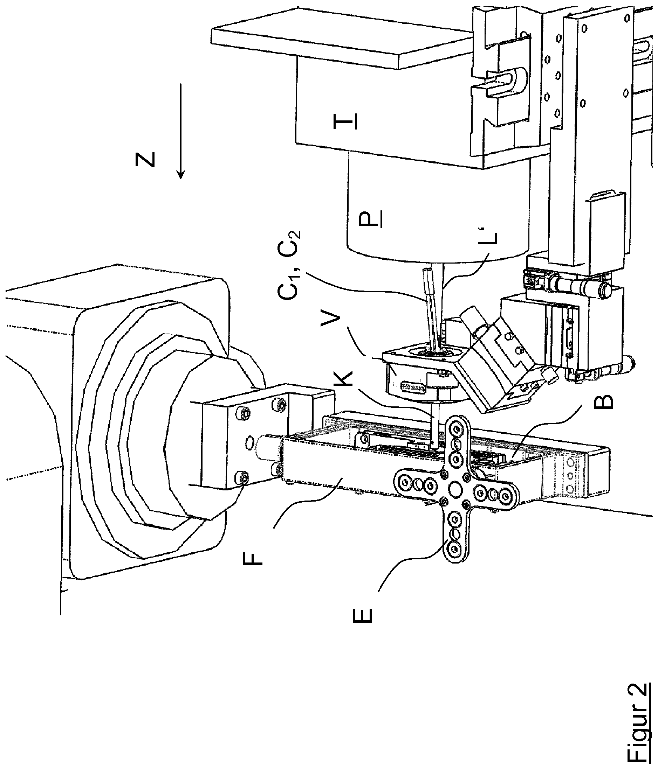

Figur 1 zeigt im Vordergrund eine monolithische Struktur B, die sich unter anderem in einer Breitenrichtung Z erstreckt und in dieser Richtung von mehreren nicht näher identifizierten Ausnehmungen durchsetzt ist. Zum Zweck der Bearbeitung des Monoblocks B ist ein in etwa zylinderförmiger Bearbeitungskopf K von der Rückseite des Monoblockes B in eine der Ausnehmungen eingeschoben und durchragt diese vollständig. Der Bearbeitungskopf K erstreckt sich in Z-Richtung und wird von einem Schwenkantrieb V gehalten. Dieser vermag den Bearbeitungskopf K um einen frei vorgebbaren Drehwinkel um die Z-Achse zu verschwenken. Ferner ist der Schwenkantrieb V gemeinsam mit dem Bearbeitungskopf K über eine in Fig. 2 dargestellte Laserbearbeitungsmaschine auch in Z-Richtung beweglich, so dass der Bearbeitungskopf verschiedene Z-Positionen innerhalb des Monoblockes B einnehmen kann (mit der Laserbearbeitungsmaschine ist der Bearbeitungskopf in der gezeigten Ausführungsform auch in und um weitere translatorische bzw. rotatorische Freiheitsgrade bewegbar).

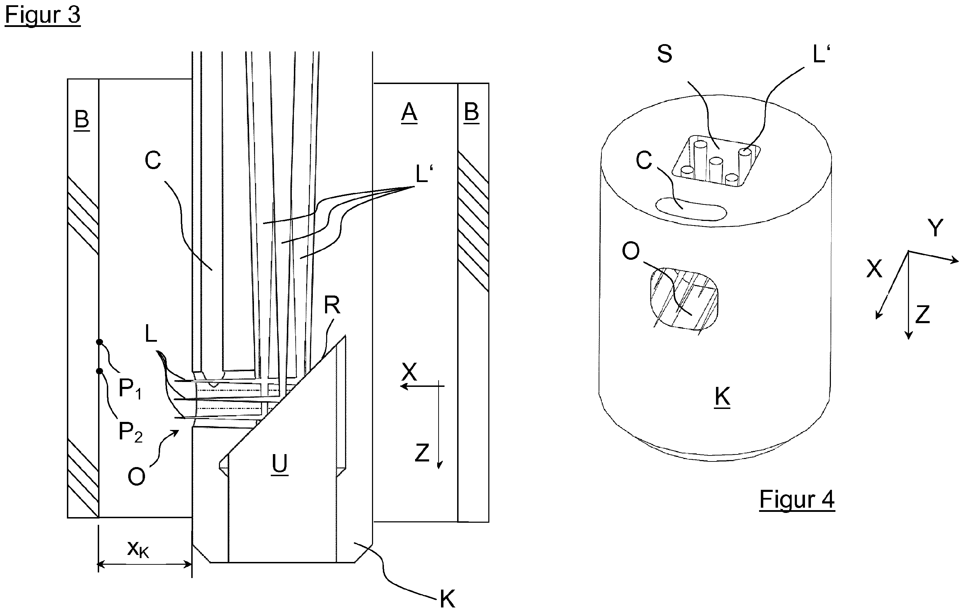

Gemäß Figur 2 ist der Schwenkantrieb V über eine nicht näher identifizierte Haltevorrichtung an einem Träger T angeordnet und über diese insbesondere in Z-Richtung verfahrbar. Die Haltevorrichtung umgreift dabei eine Optikeinheit P, von der ein Laserstrahl L' als Rohstrahl in das rückwärtige Ende des vom Schwenkantrieb V gehaltenen Bearbeitungskopfes K gerichtet wird, um innerhalb des Bearbeitungskopfes K weitergeleitet und umgelenkt zu werden, wie in Fig. 3 gezeigt ist.

Die Optikeinheit P vermag den Laserstrahl L' nach vorgebbaren und schnell veränderbaren Parametern auszurichten und zu fokussieren, so dass er an unterschiedlichen X-/Y-Positionen in den Bearbeitungskopf K bzw. auf die Umlenkmittel einstrahlen kann. Dies geschieht zum Zweck der Rasterung, bei der ohne Relativbewegung des Bearbeitungskopfes K zum Monoblock B unterschiedliche Zielpunkte durch den Laser erreichbar sind. Auf der der Optikeinheit P zugewandten Seite des Schwenkantriebs V (siehe insbesondere Fig. 1) sind zwei eng beieinander liegende Strömungskanäle C₁, C₂ dargestellt. Der Kanal C₁ führt von einer nicht dargestellten Saugeinrichtung zu einem im Bearbeitungskopf K vorgesehenen Absaugkanal C, während der Anschluss C₂ von einer ebenfalls nicht dargestellten Druckluftquelle druckdicht in einen zentrischen Schacht S des Bearbeitungskopfes K mündet, in welchen auch die von der Optikeinheit P ausgesandten Laserstrahlen L' gerichtet werden. Die zugeführte Druckluft dient zum Schutz der Umlenkmittel, um diese - etwa mittels eines Luftpolsters - von Ablagerungen freizuhalten, die bei der Laserbearbeitung entstehen. Weitere Einzelheiten hierzu sind der Fig. 3 und 4 zu entnehmen.

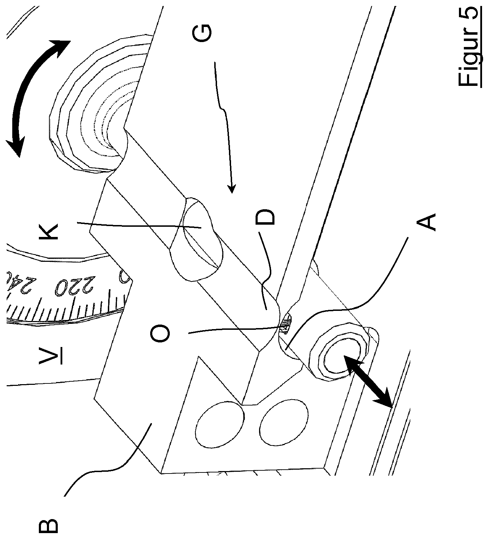

In Figur 2 ist der zu bearbeitende Monoblock B von einem Rahmen F umfasst und in vertikaler, betriebsbereiter Ausrichtung dargestellt, so dass sich die Z-Richtung horizontal erstreckt. Ein Lastkreuz E dient zur Einleitung einer Gewichtskraft in den Monoblock. Der von der Optikeinheit P ausgesandte Rohstrahl L' erreicht in horizontaler Richtung den ebenfalls horizontal ausgerichteten Bearbeitungskopf K, der seinerseits in horizontaler Z-Richtung in den Monoblock B eingeführt wird. Eine solche Anordnung (vertikal und betriebsbereit aufgestellter Monoblock) gestattet vorteilhaft eine Laserbearbeitung unter gezielter Kräftebeaufschlagung des Monoblockes zur Erzeugung von kraftabhängigen Messwerten, welche in Echtzeit Rückschlüsse auf erforderliche Nachbearbeitung insbesondere an Gelenkstellen G (Fig. 5) innerhalb des Monoblockes erlauben und die dementsprechende (Nach-) Bearbeitung in Echtzeit sofort ermöglichen.

Figur 3 zeigt in vereinfachter schematischer Schnittdarstellung den erfindungsgemäßen Bearbeitungskopf K, der im Wesentlichen zylindrisch um eine in einer ersten Richtung Z verlaufende Achse ausgebildet ist. Er ist in eine nur vereinfacht dargestellte Ausnehmung A der monolithischen Struktur B eingeschoben, um innerhalb der Struktur B eine Schar von Zielpunkten P₁, P₂ ... mittels Laser zu bearbeiten.

Dazu wird ein Laserstrahl L etwa längs der Richtung Z durch einen zentrischen Bereich (Schacht S) des Bearbeitungskopfes K geleitet, um im vorderen Endbereich des Kopfes K seitlich in X-Richtung umgelenkt zu werden, um die Zielpunkte zu erreichen. Zur Umlenkung des durch den Bearbeitungskopf K geführten Laserstrahls L' sind im vorderen Endbereich des Kopfes K Umlenkmittel U vorgesehen. In der in Fig. 3 gezeigten Ausführungsform handelt es sich dabei im Wesentlichen um einen Glaskörper mit einer zur Längsrichtung Z um etwa 45° geneigten Spiegelfläche R. Ein auf die Spiegelfläche R unter einem bestimmten Einfallswinkel auftreffender Laserstrahl L wird mit entsprechendem Ausfallswinkel von der Oberfläche R reflektiert. Ein etwa parallel zur Z-Richtung auftreffender Strahl wird an dieser Spiegeloberfläche R daher etwa rechtwinklig zur Z-Achse abgelenkt, wo er durch eine Austrittsöffnung O aus dem Bearbeitungskopf K heraustritt.

In Figur 3 sind mehrere einfallende bzw. umgelenkte Laserstrahlen L' bzw. L dargestellt. Damit soll angedeutet sein, dass der in den Bearbeitungskopf K eingeleitete Laserstrahl L' auf unterschiedliche Bereiche der Spiegeloberfläche R gerichtet sein kann, wodurch auch der entsprechend reflektierte Laserstrahl L auf unterschiedlichen Höhen- oder Breitenpositionen der Austrittsöffnung O aus dieser heraustritt. Dieses Verfahren wird als "Rasterung" bezeichnet, bei der der Laserstrahl L' auch in schneller Folge an unterschiedliche Bereiche der Spiegeloberfläche R und ausschließlich dadurch an unterschiedliche Zielpunkte P₁, P₂ ... geleitet wird. Um diese Zielpunkte zu erreichen, müssen daher die Umlenkmittel U und der diese tragende Bearbeitungskopf K relativ zur monolithischen Struktur B nicht bewegt (um Z verschwenkt oder in Z-Richtung verfahren) werden.

Um weitere Zielpunkte zu bearbeiten, welche in der aktuellen Position des Bearbeitungskopfes K nicht durch Rasterung zu erreichen sind, kann der erfindungsgemäße Bearbeitungskopf in Z-Richtung verfahren und/oder um seine in Z-Richtung verlaufende Achse verschwenkt werden. Damit lassen sich alle seitlich zum Bearbeitungskopf innerhalb der Ausnehmung A liegenden Zielpunkte erreichen bzw. bearbeiten.

In Fig. 3 ist aus Gründen der besseren Darstellung ein Abstand X_{K} zwischen der Au-ßenwand des Bearbeitungskopfes K und der Innenwand der Ausnehmung A beziehungsweise zu den Zielpunkten P₁, P₂ überproportional groß dargestellt. Tatsächlich soll der Abstand X_{K} möglichst gering sein, um bei der Laserbearbeitung der Zielpunkte P₁, P₂,... anfallenden Materialabtrag unmittelbar durch die Austrittsöffnung O hindurch in den Absaugkanal C abführen zu können. Entsprechend enden in der Zeichnung die umgelenkten Laserstrahlen L in einer Spitze, welche die höchste Energiedichte des Lasers darstellt und damit die X-Position, in welcher die Zielpunkte eigentlich bei der Bearbeitung liegen sollten. Tatsächlich liegt der Außendurchmesser des Bearbeitungskopfes K daher nur unwesentlich unter dem Innendurchmesser der Ausnehmung A.

Die als abgeschrägter Glaszylinder ausgeführten Umlenkmittel U sind über das vordere Ende des Bearbeitungskopfes K bis an einen geeigneten Anschlag eingeschoben und befestigt. Die Umlenkmittel können dauerhaft bzw. unlösbar mit dem Bearbeitungskopf K verbunden sein, beispielsweise durch Kleben. Alternativ ist jedoch auch eine lösbare Befestigung denkbar, um die Umlenkmittel U leicht austauschen zu können.

Ein durch den Bearbeitungskopf K geführter Absaugkanal C mündet im Bereich des Laseraustritts in die Austrittsöffnung O. Bei der Laserbehandlung entstehender Materialabtrag kann durch diesen Absaugkanal C durch den Bearbeitungskopf K hindurch nach oben geführt werden. Die Mündungsposition des Absaugkanals C in die Austrittsöffnung O ist dabei so gewählt, dass der Materialabtrag beim Einsaugen nicht bis auf die Spiegeloberfläche R gelangt, sondern bereits möglichst nah an der Austrittsstelle des Lasers in den Absaugkanal C eingesaugt wird. Zusätzlich kann über den Eintrittskanal S des Lasers L' auch Druckluft eingespeist werden (mittels Kanal C₂ gemäß Fig. 2), welche die Umlenkmittel überströmt und dadurch freihält von durch die Öffnung O eingesaugten Fremdkörpern oder Materialabtrag. Die Druckluft wird ferner in Richtung X zur Austrittsöffnung O hin umgelenkt und strömt dort in den Absaugkanal C ein, was zusätzlich dazu beiträgt, von außen eingesaugten Materialabtrag in den Kanal C zu leiten.

Der Einsaugkanal C kann, anders als in Fig. 1 dargestellt, im Bereich der Austrittsöffnung O auch ringkanalförmig um die Mittelachse des Bearbeitungskopfes K ausgeführt sein, um eine verbesserte Absaugleistung zu erzielen.

Bei Herstellung des Bearbeitungskopfes im Sinterdruckverfahren lassen sich die einzelnen Ausnehmungen im Bearbeitungskopf (Laserkanal, Austrittsöffnung O, Ausnehmung für die Umlenkmittel U, Absaugkanal C) mit großen konstruktiven Freiheiten fertigen. So kann beispielsweise der Laserkanal, durch welchen der Laserstrahl L' vor dem Auftreffen auf die Spiegeloberfläche R geführt wird, eine leicht konische Gestalt bekommen. Dadurch kann die mittels Kanal C₂ zugeführte Zuluft genauer auf die Umlenkmittel gerichtet werden.

Fig. 4 zeigt den Bearbeitungskopf senkrecht zur Z-Achse etwas oberhalb der Austrittsöffnung O geschnitten. Zu sehen ist der zentrische, mit gerundeten Ecken quadratisch ausgeführte Lasereintrittskanal S, durch den verschieden ausgerichtete Laserstrahlen L' auf die Umlenkmittel U auftreffen, um dadurch seitlich aus der Austrittsöffnung O herausgeführt zu werden. Durch den Lasereintrittskanal S strömt auch Druckluft in Richtung auf die Umlenkmittel. Oberhalb der Austrittsöffnung O ist der im Querschnitt etwa nierenförmige Absaugkanal C zu sehen.

Figur 5 zeigt in vergrößerter Darstellung einen im Bereich einer Gelenkstruktur G in einen Monoblock B eingeschobenen Bearbeitungskopf K, der von dem Schwenkantrieb V gehalten wird. Der Bearbeitungskopf K hat dabei in Z-Richtung eine Länge, welche die Breite des Monoblockes B übertrifft. Dadurch kann der Monoblock B mittels Bearbeitungskopf K von einer Blockseite her bearbeitet werden; ein Umspannen zum Einführen des Kopfes K von der anderen Blockseite ist dadurch vorteilhafterweise nicht erforderlich.

Die Austrittsöffnung O des Bearbeitungskopfes K lässt sich durch Verfahren in Z-Richtung beziehungsweise Verschwenken um die Z-Achse (siehe angedeutete Pfeile) an verschiedene Positionen innerhalb des Blockes B verfahren, um die Dünnstelle D mit den aus der Austrittsöffnung O herausgelenkten Laserstrahlen herzustellen beziehungsweise zu bearbeiten. Zu sehen ist in Fig. 5 weiterhin, dass der Außendurchmesser des Bearbeitungskopfes K bestmöglich an die kreisabschnittsförmige Geometrie der innenliegenden Dünnstellenausnehmung A angepasst ist, um Materialabtrag besonders gut abführen zu können.

## Patentansprüche

1. Verfahren zur Laserstrahlbearbeitung von monolithischen Strukturen (B) für wägetechnische Anwendungen, bei dem sich die Struktur (B) entlang einer ersten Richtung (Z) erstreckt und bei dem ein von außen auf die Struktur (B) gerichteter Laserstrahl zur materialabtragenden Bearbeitung auf eine Schar von Zielpunkten (P₁, P₂...) der Struktur (B) gelenkt wird, umfassend folgende Schritte:
a) Einleitung eines Laserstrahls (L') in einen Abschnitt des Bearbeitungskopfes (K),
b) Umlenkung des Laserstrahls (L') durch Umlenkmittel (U) in eine von der ersten Richtung (Z) abweichende Richtung (X), in welcher der umgelenkte Laserstrahl (L) einen Zielpunkt (P₁, P₂...) erreicht,
c) wobei der Bearbeitungskopf (K) in eine sich in Z-Richtung in die Struktur (B) erstreckende Ausnehmung (A) eingeführt wird, und
d) wobei der Bearbeitungskopf (K), um mit dem umgelenkten Laserstrahl (L) die Schar von Zielpunkten (P₁, P₂...) zu bearbeiten, in Z-Richtung verfahren und/oder um eine in Z-Richtung verlaufende Schwenkachse geschwenkt wird, **dadurch gekennzeichnet,**
e) **dass** die Bearbeitung erfolgt, während die monolithische Struktur (B) zur Ausgabe von Messwerten als Teil einer Wägezelle betrieben wird, wobei die monolithische Struktur (B) mit äußeren Kräften beaufschlagt wird, wobei die Bearbeitung Abhängigkeit der gemessenen Werte erfolgt, wobei ein Kraftsensor Messwerte ausgibt und eine die Messwerte sofort auswertende Steuereinheit Steuersignale für die Laserbearbeitung erzeugt, so dass in Abhängigkeit eines Messwertes eine bestimmte Schar von Zielpunkten ermittelt wird, welche zu bearbeiten ist, um das tatsächliche Messergebnis einem zu erwartenden Ergebnis anzugleichen.

2. Verfahren nach Anspruch 1, **dadurch gekennzeichnet, dass** der Abstand zwischen Umlenkmitteln (U) oder Bearbeitungskopf (K) und einem Zielpunkt (P₁, P₂...) weniger als 5mm, bevorzugt weniger als 2mm, höchst bevorzugt weniger als 0,5mm beträgt.

3. Verfahren nach einem der vorigen Ansprüche, **dadurch gekennzeichnet, dass** der Laserstrahl (L) entlang der Schar von Zielpunkten (P₁, P₂...) geführt wird, welche eine Bearbeitungszone in Form eines Punktes, einer Linie, einer Fläche oder eines Volumens bilden, um die Zone materialabtragend zu bearbeiten.

4. Verfahren nach einem der vorigen Ansprüche, **dadurch gekennzeichnet, dass** ein Zielpunkt (P₁, P₂...) auf der Oberfläche einer Gelenkstruktur (G), insbesondere einer Dünnstelle liegt, welche Teil eines Hebels, eines Lagers, einer Koppelstange oder eines Parallelogrammlenkers ist.

5. Verfahren nach einem der vorigen Ansprüche, **dadurch gekennzeichnet, dass** eine vorzugsweise ortsfeste Laserquelle einen Laserstrahl (L') als Rohstrahl erzeugt, welcher vor Erreichen der Umlenkmittel (U) durch eine ortsfeste oder mit dem Bearbeitungskopf (K) bewegliche Optikeinheit (P) hindurchtritt, um den Laserstrahl (L) einzustellen, insbesondere zu fokussieren.

6. Verfahren nach dem vorhergehenden Anspruch, **dadurch gekennzeichnet, dass** der Laserstrahl (L) eine Auswahl von Zielpunkten aus der Schar von Zielpunkten (P₁, P₂...) bearbeitet, indem die Optikeinheit (P) bei relativ zur monolithischen Struktur (B) unbewegten Umlenkmitteln (U) den Rohstrahl (L') auf unterschiedliche Bereiche der Umlenkmittel (U) richtet, so dass der jeweils umgelenkte Laserstrahl (L) verschiedene Zielpunkte der Auswahl bearbeitet.

7. Verfahren nach einem der vorigen Ansprüche, **dadurch gekennzeichnet, dass** der Bearbeitungskopf (K) zur Bearbeitung einer auf einer Kreisbahn liegenden Schar von Zielpunkten (P₁, P₂...) so positioniert wird, dass die den Laserstrahl umlenkenden Komponenten der Umlenkmittel (U) in etwa im Zentrum des Kreises liegen.

8. Verfahren nach einem der vorigen Ansprüche, **dadurch gekennzeichnet, dass** der Laser im Ultrakurzpuls-Verfahren (UKP) betrieben wird mit Pulslängen im Bereich kleiner 1 Nanosekunde und mit Wiederholraten im Kilo- oder Megahertzbereich, um den Wärmeeintrag in die Zielpunkte (P₁, P₂...) bei der Bearbeitung gering zu halten.

9. Verfahren nach einem der vorigen Ansprüche, **dadurch gekennzeichnet, dass** bei der Bearbeitung anfallender Materialabtrag über einen an oder im Bearbeitungskopf (K) vorgesehenen, vorzugweise in Z-Richtung gesehen auf Höhe der Umlenkmittel (U) mündenden Absaugkanal (C) abgeführt wird, um eine Materialablagerung auf den Umlenkmitteln (U) zu vermeiden.

10. Verfahren nach dem vorhergehenden Anspruch, **dadurch gekennzeichnet, dass** mehrere, jeweils die Schritte b) bis d) des Anspruchs 1 umfassende Bearbeitungsabläufe erfolgen, während der Bearbeitungskopf (K) durchgehend in der Ausnehmung (A) verbleibt, wobei während oder zwischen den einzelnen Abläufen die gemessenen Werte zur Einstellung von Bearbeitungsparametern des folgenden Bearbeitungsablaufs ausgewertet werden.

11. Vorrichtung zur Durchführung eines der vorgenannten Verfahren, umfassend
- einen Bearbeitungskopf (K), in welchen ein Laserstrahl (L') in einer ersten Richtung (Z) einleitbar ist, und
- Umlenkmittel (U), welche den Laserstrahl (L') im Bearbeitungskopf (K) in eine von der Richtung (Z) abweichende Richtung (X) umlenken, um den umgelenkte Laserstrahl (L) seitlich auf einen Zielpunkt (P₁, P₂...) zu richten,
- wobei der Bearbeitungskopf (K) samt Umlenkmitteln (U) in Richtung (Z) verfahrbar und/oder um eine in Z-Richtung verlaufende Schwenkachse verschwenkbar ist,
**dadurch gekennzeichnet,**
- **dass** die Vorrichtung ferner einen Kraftsensor und eine Steuereinheit aufweist, und die Vorrichtung dazu ausgebildet ist, dass die Bearbeitung erfolgt, während die monolithische Struktur (B) zur Ausgabe von Messwerten als Teil einer Wägezelle betrieben wird, in dem die monolithische Struktur (B) mit äußeren Kräften beaufschlagt wird, wobei die Bearbeitung erfolgt in Abhängigkeit der gemessenen Werte, indem Kraftsensor Messwerte ausgibt und die die Messwerte sofort auswertende Steuereinheit Steuersignale für die Laserbearbeitung erzeugt, so dass in Abhängigkeit eines Messwertes eine bestimmte Schar von Zielpunkten ermittelt wird, welche zu bearbeiten ist, um das tatsächliche Messergebnis einem zu erwartenden Ergebnis anzugleichen.

12. Vorrichtung nach dem vorhergehenden Anspruch, **dadurch gekennzeichnet, dass** der Bearbeitungskopf (K) kanalförmige Absaugmittel (C) umfasst, mittels welcher bei der Bearbeitung des Zielpunktes (P₁, P₂...) entstehender Materialabtrag oder Plasma abgeführt werden kann.

13. Vorrichtung nach Anspruch 11 oder 12, **dadurch gekennzeichnet, dass** der umgelenkte Laserstrahl (L) aus einer seitlichen Öffnung (O) des Bearbeitungskopfes (K) herausgeführt wird, wobei der Bearbeitungskopf (K) zumindest im Bereich der Öffnung (O) zylinderförmig ist.

## Claims

1. Method for laser beam machining of monolithic structures (B) for weighing applications, in which the structure (B) extends along a first direction (Z) and in which a laser beam directed from the outside onto the structure (B) is directed to a set of target points (P₁, P₂...) of the structure (B) for material-removing machining, comprising the following steps:
a) introducing a laser beam (L') into a portion of the machining head (K),
b) deflecting the laser beam (L') by means of deflection means (U) in a direction (X) which deviates from the first direction (Z) and in which the deflected laser beam (L) reaches a target point (P₁, P₂...),
c) the machining head (K) being inserted into a recess (A) which extends into the structure (B) in the Z direction, and
d) the machining head (K) being moved in the Z direction and/or pivoted about a pivot axis extending in the Z direction in order to machine the set of target points (P₁, P₂...) using the deflected laser beam (L),
**characterized in that**
e) the machining takes place while the monolithic structure (B) is operated to output measured values as part of a load cell, the monolithic structure (B) being subjected to external forces and the machining taking place depending on the measured values, a force sensor outputting measured values and a control unit, which immediately evaluates the measured values, generating control signals for the laser machining, such that a certain set of target points is determined depending on a measured value, which set is to be machined in order to match the actual measurement result to a result to be expected.

2. Method according to claim 1, **characterized in that** the distance between deflection means (U) or the machining head (K) and a target point (P₁, P₂...) is less than 5 mm, preferably less than 2 mm, most preferably less than 0.5 mm.

3. Method according to either of the preceding claims, **characterized in that** the laser beam (L) is guided along the set of target points (P₁, P₂...) which form a machining zone in the form of a point, a line, an area or a volume, in order to machine the zone in a material-removing manner.

4. Method according to any of the preceding claims, **characterized in that** a target point (P₁, P₂...) is located on the surface of a joint structure (G), in particular a thin point, which is part of a lever, a bearing, a coupling rod or a parallelogram linkage.

5. Method according to any of the preceding claims, **characterized in that** a preferably stationary laser source generates a laser beam (L') as a raw beam, which, before reaching the deflection means (U), passes through an optical unit (P) which is stationary or can be moved with the machining head (K), in order to adjust, in particular focus, the laser beam (L).

6. Method according to the preceding claim, **characterized in that** the laser beam (L) machines a selection of target points from the set of target points (P₁, P₂...) by the optical unit (P) directing the raw beam (L') onto different regions of the deflection means (U) when the deflection means (U) are not moved relative to the monolithic structure (B), such that the laser beam (L) deflected in each case machines different target points of the selection.

7. Method according to any of the preceding claims, **characterized in that** the machining head (K), in order to machine a set of target points (P₁, P₂...) located on a circular path, is positioned in such a way that the components of the deflection means (U) that deflect the laser beam are located approximately in the center of the circle.

8. Method according to any of the preceding claims, **characterized in that** the laser is operated in the ultrashort pulse process (USP) with pulse lengths in the range of less than 1 nanosecond and with repetition rates in the kilo or megahertz range in order to keep the heat input into the target points (P₁, P₂...) low during machining.

9. Method according to any of the preceding claims, **characterized in that** removed material produced during machining is discharged via a suction channel (C) which is provided on or in the machining head (K) and, when viewed in the Z direction, preferably opens at the level of the deflection means (U), in order to prevent material deposits on the deflection means (U).

10. Method according to the preceding claim, **characterized in that** a plurality of machining processes, each comprising steps b) to d) of claim 1, take place, while the machining head (K) remains continuously in the recess (A), the measured values being evaluated for adjusting machining parameters of the subsequent machining process during or between the individual processes.

11. Device for carrying out one of the aforementioned methods, comprising
- a machining head (K) into which a laser beam (L') can be introduced in a first direction (Z), and
- deflection means (U) which deflect the laser beam (L') in the machining head (K) in a direction (X) which deviates from direction (Z), in order to direct the deflected laser beam (L) laterally to a target point (P₁, P₂...),
- the machining head (K), together with the deflection means (U), being movable in direction (Z) and/or pivotable about a pivot axis extending in the Z direction, **characterized in that**
- the device also has a force sensor and a control unit, and the device is designed such that the machining takes place while the monolithic structure (B) is operated to output measured values as part of a load cell by the monolithic structure (B) being subjected to external forces, the machining taking place depending on the measured values by the force sensor outputting measured values and the control unit, which immediately evaluates the measured values, generating control signals for the laser machining, such that a certain set of target points is determined depending on a measured value, which set is to be machined in order to match the actual measurement result to a result to be expected.

12. Device according to the preceding claim, **characterized in that** the machining head (K) comprises channel-shaped suction means (C), by means of which removed material or plasma produced during the machining of the target point (P₁, P₂...) can be discharged.

13. Device according to either claim 11 or claim 12, **characterized in that** the deflected laser beam (L) is guided out of a lateral opening (O) of the machining head (K), the machining head (K) being cylindrical at least in the region of the opening (O).

## Revendications

1. Procédé de traitement par faisceau laser de structures monolithiques (B) destiné à des applications de pesage, dans lequel la structure (B) s'étend le long d'une première direction (Z) et dans lequel un faisceau laser dirigé sur la structure (B) depuis l'extérieur est appliqué sur un ensemble de points cibles (P₁, P₂...) de la structure (B) pour le traitement par enlèvement, comprenant les étapes suivantes :
a) l'introduction d'un faisceau laser (L') dans une section de la tête de traitement (K),
b) la déviation du faisceau laser (L') par des moyens de déviation (U) dans une direction (X) s'écartant de la première direction (Z) et dans laquelle le faisceau laser dévié (L) atteint un point cible (P₁, P₂...),
c) dans lequel la tête de traitement (K) est insérée dans un évidement (A) s'étendant dans la direction Z dans la structure (B), et
d) dans lequel la tête de traitement (K), afin de traiter l'ensemble de points cibles (P₁, P₂...) avec le faisceau laser dévié (L), est déplacée dans la direction Z et/ou est pivotée autour d'un axe de pivotement s'étendant dans la direction Z,
caractérisé en ce
e) que le traitement a lieu pendant que la structure monolithique (B) est actionnée en tant que partie d'une cellule de pesée afin de délivrer des valeurs mesurées, la structure monolithique (B) étant soumise à des forces extérieures, le traitement ayant lieu en fonction des valeurs mesurées, un capteur de force délivrant des valeurs mesurées et une unité de commande, laquelle évalue immédiatement les valeurs mesurées, générant des signaux de commande pour le traitement laser, de sorte que, en fonction d'une valeur mesurée, un certain ensemble de points cibles à traiter est déterminé, afin d'harmoniser le résultat mesuré réel avec un résultat attendu.

2. Procédé selon la revendication 1, **caractérisé en ce que** la distance entre les moyens de déviation (U) ou la tête de traitement (K) et un point cible (P₁, P₂...) est inférieure à 5 mm, de préférence inférieure à 2 mm, le plus préférablement inférieure à 0,5 mm.

3. Procédé selon l'une des revendications précédentes, **caractérisé en ce que** le faisceau laser (L) est guidé le long de l'ensemble de points cibles (P₁, P₂...), lesquels forment une zone de traitement sous la forme d'un point, d'une ligne, d'une surface ou d'un volume, afin de traiter la zone par enlèvement de matière.

4. Procédé selon l'une des revendications précédentes, **caractérisé en ce qu'**un point cible (P₁, P₂...) se trouve à la surface d'une structure d'articulation (G), en particulier d'une partie mince, laquelle fait partie d'un levier, d'un palier, d'une barre d'accouplement ou d'un guidon en parallélogramme.

5. Procédé selon l'une des revendications précédentes, **caractérisé en ce qu'**une source laser de préférence fixe génère un faisceau laser (L') sous forme de faisceau brut, lequel, avant d'atteindre les moyens de déviation (U), traverse une unité optique (P) fixe ou mobile au moyen de la tête de traitement (K), afin de régler le faisceau laser (L), en particulier de le focaliser.

6. Procédé selon la revendication précédente, **caractérisé en ce que** le faisceau laser (L) traite une sélection de points cibles de l'ensemble de points cibles (P₁, P₂...) en dirigeant l'unité optique (P), lorsque les moyens de déviation (U) sont immobiles par rapport à la structure monolithique (B), le faisceau brut (L') sur différentes zones des moyens de déviation (U) de sorte que le faisceau laser respectivement dévié (L) traite différents points cibles de la sélection.

7. Procédé selon l'une des revendications précédentes, **caractérisé en ce que** la tête de traitement (K) est positionnée, pour le traitement d'un ensemble de points cibles (P₁, P₂...) se trouvant sur une trajectoire circulaire, de telle sorte que les composants déviant le faisceau laser des moyens de déviation (U) se trouvent sensiblement au centre du cercle.

8. Procédé selon l'une des revendications précédentes, **caractérisé en ce que** le laser fonctionne selon un procédé à impulsions ultra-courtes (UKP), avec des longueurs d'impulsions de l'ordre de moins de 1 nanoseconde et avec des taux de répétition de l'ordre du kilohertz ou du mégahertz afin de réduire l'apport de chaleur dans les points cibles (P₁, P₂...) lors du traitement.

9. Procédé selon l'une des revendications précédentes, **caractérisé en ce que** l'enlèvement de matière survenant pendant le traitement est évacué par l'intermédiaire d'un canal d'aspiration (C) prévu sur ou dans la tête de traitement (K), de préférence vu dans la direction Z au niveau des moyens de déviation (U), afin d'éviter un dépôt de matière sur les moyens de déviation (U).

10. Procédé selon la revendication précédente, **caractérisé en ce que** plusieurs processus de traitement, comprenant respectivement les étapes b) à d) de la revendication 1, ont lieu pendant que la tête de traitement (K) reste en permanence dans l'évidement (A), les valeurs mesurées étant évaluées pendant ou entre les différents processus afin de régler les paramètres de traitement du processus de traitement suivant.

11. Dispositif d'exécution de l'un des procédés susmentionnés, comprenant
- une tête de traitement (K) dans laquelle un faisceau laser (L') peut être introduit dans une première direction (Z), et
- des moyens de déviation (U) qui dévient le faisceau laser (L') dans la tête de traitement (K) dans une direction (X) s'écartant de la direction (Z) pour diriger le faisceau laser dévié (L) latéralement sur un point cible (P₁, P₂...),
- dans lequel la tête de traitement (K), y compris les moyens de déviation (U), peut être déplacée dans la direction (Z) et/ou peut être pivotée autour d'un axe de pivotement s'étendant dans la direction Z,
**caractérisé en ce**
- **que** le dispositif présente également un capteur de force et une unité de commande, et que le dispositif est conçu pour que le traitement ait lieu
pendant que la structure monolithique (B) est actionnée en tant que partie d'une cellule de pesée pour délivrer les valeurs mesurées en soumettant la structure monolithique (B) à des forces externes, le traitement ayant lieu en fonction des valeurs mesurées
par l'émission, par le capteur de force, des valeurs mesurées et par la génération, par l'unité de commande qui évalue immédiatement les valeurs mesurées, de signaux de commande pour le traitement laser, de sorte que, en fonction d'une valeur mesurée, un certain ensemble de points cibles à traiter est déterminé afin d'harmoniser le résultat de mesure réel avec un résultat attendu.

12. Dispositif selon la revendication précédente, **caractérisé en ce que** la tête de traitement (K) comprend des moyens d'aspiration (C) en forme de canal, au moyen desquels l'enlèvement de matière ou de plasma qui se produit lors du traitement du point cible (P₁, P₂...) peut être évacué.

13. Dispositif selon la revendication 11 ou 12, **caractérisé en ce que** le faisceau laser dévié (L) est guidé hors d'une ouverture latérale (O) de la tête de traitement (K), la tête de traitement (K) étant cylindrique au moins dans la zone de l'ouverture (O).
